# EUROPÄISCHE PATENTANMELDUNG

(11) **EP 4 679 198 A1**
(43) Veröffentlichungstag der Anmeldung: **14.01.2026**
(21) Anmeldenummer: 24187892.5
(22) Anmeldetag: 11.07.2024
(51) Int. Cl.: G05B 13/02, G06N 3/096, G06N 3/098, G06N 3/045

(54) **COMPUTER-IMPLEMENTIERTES VERFAHREN UND SYSTEM ZUM BETRIEB EINES TECHNISCHEN GERÄTS BASIEREND AUF EINEM ANHAND VON FÖDERIERTEM LERNEN UND WISSENSTRANSFER TRAINIERTEN MODELLS.**

(71) Anmelder: Siemens Aktiengesellschaft, 80333 München (DE)
(72) Erfinder: Schall, Daniel, 2020 Hollabrunn (AT)
(74) Vertreter: Siemens Patent Attorneys

(57) **Zusammenfassung**

Computer-implementiertes Verfahren zum Betrieb eines technischen Geräts (TD1) durch ein System (SYS) mit einem ersten Server (S1) und mehreren Klienten (C1-C3), wobei folgende Schritte ausgeführt werden:
a) Bereitstellen eines Grund-Modells (FM) an den ersten Server (S1),
b) Erstellen eines Leicht-Modells (LFM) aus dem Grund-Modell (FM) durch Wissenstransfer, wobei das Leicht-Modells (LFM) eine Modell-Struktur aufweist, welche eine Teilmenge der Modell-Struktur des Grund-Modells (FM) ist, durch den ersten Server (S1),
c) Übertragen des Leicht-Modells (LFM) vom ersten Server (S1) an die Klienten (C1-C3),
d) Erzeugen und Trainieren eines lokalen Modells (LM1-LM3) aus dem Leicht-Modell, im jeweiligen Klienten (C1-C3) mit jeweiligen bereitgestellten Trainingsdaten,
e) Übertragen des trainierten, lokalen Modells (LM1-LM3) von den jeweiligen Klienten (C1-C3) an den ersten Server (S1),
f) Aggregieren der empfangenen lokalen Modelle (LM1-LM3) zu einem globalen Modell (GM), im ersten Server (S1),
g) Trainieren des Grund-Modells (FM) mit dem globalen Modell (GM), durch den ersten Server (S1) oder durch einen verbundenen, zweiten Server (S2) des Systems (SYS), welcher in einer Cloud gelegen ist,
h) Übertragen des globalen Modells (GM) vom ersten Server (S1) an einen jeweiligen Klienten (C1-C3), welcher mit dem technischen Gerät (TD1) verbundenen ist, und Betreiben des technischen Geräts (TD1) mit dem empfangenen Modell (GM),
i) Fortsetzen mit Schritt a).

## Beschreibung

Die Erfindung betrifft ein computer-implementiertes Verfahren und ein System zum Betrieb eines technischen Geräts, wobei das System einen ersten Server und mehreren Klienten umfasst.

Die Erfindung betrifft ferner ein Computerprogramm-Produkt.

Ein Grund- oder Gründungs-Modell (engl. "foundation model", kurz FM) ist ein Modell künstlicher Intelligenz (kurz KI), welches mit allgemeinen Daten, die ein, mehrere oder sogar eine Vielzahl Anwendungsgebiete umfassen, trainiert wird, sodass das Modell wiederum auf eine Vielzahl von Anwendungsfällen entsprechend angewendet werden kann.

Grund-Modelle haben die KI verändert und prominente Chatbots und generative KI unterstützt.

Grund-Modelle sind also Allzwecktechnologien, die eine Vielzahl von Anwendungsfällen unterstützen können.

Die Erstellung von Grundlagenmodellen ist jedoch oft sehr ressourcenintensiv, wobei die teuersten Modelle Hunderte von Millionen Dollar kosten können, um die zugrunde liegenden Daten und Berechnungen zu bezahlen.

Föderiertes Lernen (engl. "federated learning", kurz FL) erweist sich als praktikable Lösung, da nicht mehr große Datenmengen zur Modell-Bildung bereitgestellt werden müssen, und Daten aus einem breiteren Spektrum von Quellen nutzen zu können.

Dieser verbesserte Zugriff auf Daten führt zur Entwicklung genauerer und effizienterer Systeme, die besser auf die spezifischen Bedürfnisse und Präferenzen der Benutzer in verschiedenen Szenarien zugeschnitten sind.

Darüber hinaus wird durch die Integration von föderiertem Lernen in Grund-Modelle die Nutzung privater Daten verantwortungsbewusster und bietet darüber hinaus einzelnen Nutzern die Möglichkeit, die Quellen ihrer Daten zu verfolgen.

Die Entwicklung von Grund-Modellen wurde in erster Linie von großen und finanzstarken Unternehmen vorangetrieben, was die Beteiligung kleinerer Organisationen an solchen Modellen unerwünscht einschränkt, und Vielfalt, Innovation und Demokratisierung behindert.

Im Stand der Technik wird das Training von Grund-Modellen häufig von einer einzigen Einheit oder Unternehmen, wie beispielsweise OpenAI, Microsoft, Meta, Google oder Amazon Web Services durchgeführt.

Grund-Modelle werden dann über eine Anwendungsprogrammierschnittstelle (kurz API) und/oder Webservice-Schnittstellen Nutzern zur Verfügung gestellt.

Ein Benutzer kann das Modell dann beispielsweise durch "Prompt Engineering", "Retrieval-Augmented Generation" (kurz RAG) oder eine Feinabstimmung des Modells parametrisieren oder kontextualisieren.

Die Erstellung eines (industriellen) Grund-Modells von Grund auf ist jedoch schwierig und für die meisten Unternehmen aufgrund der erforderlichen Recheninfrastruktur und der riesigen Datensätze, die zum Trainieren solcher Modelle erforderlich sind, nicht realisierbar.

Daher bleibt das Training von Grund-Modellen weiterhin in den Händen einiger weniger "Hyperscaler".

Es ist daher Aufgabe der Erfindung eine Lösung bereitzustellen, bei welcher die genannten Einschränkungen in Bezug auf Datenverfügbarkeit, Hardwareressourcen, kontinuierliches Datenwachstum und Vielfalt der Anwendungsdomänen überwunden werden können.

Die erfindungsgemäße Aufgabe wird durch ein computer-implementiertes Verfahren zum Betrieb eines technischen Geräts durch ein System mit einem ersten Server und mehreren Klienten gelöst, wobei folgende Schritte ausgeführt werden:
a) Bereitstellen eines Grund-Modells an den ersten Server,
b) Erstellen eines Leicht-Modells aus dem Grund-Modell durch Wissenstransfer, wobei das Leicht-Modells eine Modell-Struktur aufweist, welche eine Teilmenge der Modell-Struktur des Grund-Modells ist, durch den ersten Server,
c) Übertragen des Leicht-Modells vom ersten Server an die Klienten,
d) Erzeugen und Trainieren eines lokalen Modells aus dem Leicht-Modell, im jeweiligen Klienten mit jeweiligen bereitgestellten Trainingsdaten,
e) Übertragen des trainierten, lokalen Modells von den jeweiligen Klienten an den ersten Server,
f) Aggregieren der empfangenen lokalen Modelle zu einem globalen Modell, im ersten Server,
g) Trainieren des Grund-Modells mit dem globalen Modell, durch den ersten Server oder durch einen verbundenen, zweiten Server des Systems, welcher in einer Cloud gelegen ist,
h) Übertragen des globalen Modells vom ersten Server an einen jeweiligen Klienten, welcher mit dem technischen Gerät verbundenen ist, und Betreiben des technischen Geräts mit dem empfangenen Modell,
i) Fortsetzen mit Schritt a).

Dadurch wird erreicht, dass ein Grund-Modell durch die Anwendung föderierten Lernens einfacher und effizienter an eine Anwendung angepasst werden kann, wodurch der Weg für die breite Einführung und Weiterentwicklung von industriellen Grund-Modellen geebnet werden kann und seine Anwendung in verschiedenen Bereichen ermöglicht.

Ein "Lifecycle-Management" für das Grund-Modell ist entscheidend für seine nachhaltige Leistungsfähigkeit und Anpassungsfähigkeit.

Es umfasst die kontinuierliche Überwachung der Modellgenauigkeit, die Erkennung und den Umgang mit Datenabweichungen, die Einhaltung von Sicherheitsstandards und -vorschriften, die Optimierung von Ressourcen, die Integration technologischer Fortschritte, die systematische Fehleranalyse und -behebung, die nahtlose Skalierbarkeit und Bereitstellung, die effektive Modellverwaltung und die Planung für End-of-Life-Szenarien.

Durch die Berücksichtigung dieser Aspekte stellt das Lifecycle-Management sicher, dass sich das Grund-Modell mit sich ändernden Bedingungen weiterentwickeln, eine optimale Effizienz beibehalten, Governance- und Compliance-Anforderungen erfüllen kann, sowie gut auf zukünftige Fortschritte oder Übergänge vorbereitet sein kann, was letztendlich zum langfristigen Erfolg und zur Zuverlässigkeit des Modells im bereitgestellten System beiträgt.

### Folgende Modelle werden verwendet:

Das Grund-Modell (kurz FM) ist ein Basis- oder Anfangsmodell, das als Ausgangspunkt für verschiedene Aufgaben des maschinellen Lernens dient und bildet ein gut trainiertes Modell für eine bestimmte Aufgabe und kann als Referenz oder Baustein für speziellere Modelle verwendet werden.

Ein "LightFleet"-Modell (kurz LFM) bezieht sich auf ein leichtgewichtiges Modell, das für föderierte Lernszenarien entwickelt wurde.

Föderiertes Lernen (eng. "federated learning", kurz FL) umfasst das Training von Modellen über dezentrale Geräte oder Server (Klienten) hinweg, ohne Rohdaten auszutauschen. Das LightFleet-Modell ist auf Effizienz optimiert und eignet sich daher für den Einsatz in föderierten Lernumgebungen.

Das Leicht-Modell weist Leicht-Modell-Gewichte und eine Leicht-Modell-Struktur auf, wobei die Leicht-Modell-Struktur eine Teilmenge der Modell-Struktur des Grund-Modells ist.

Dadurch wird erreicht, dass das Leicht-Modell kleiner ist und daher leichter, einfacher und effizienter zwischen den Systemeinheiten, wie Server und Klienten, übertragen werden kann, wobei zusätzlich durch die Anwendung föderierten Lernens der Datenschutz über die verwendeten Daten gewahrt bleibt.

Das lokale Modell weist lokale Modell-Gewichte und eine lokale Modell-Struktur auf, wobei die lokale Modell-Struktur der Leicht-Modell-Struktur, sowie der globalen Modell-Struktur entspricht.

Durch das Training des Grund-Modells wird sichergestellt, dass das Grund-Modell selbst aktualisiert wird und ein Wissens-Transfer zurück zum Ausgangs-Modell erfolgt, wodurch ein bidirektionaler Wissens-Transfer zwischen dem Grund-Modell und dem lokalen Modell erreicht wird.

Es wird ein fortlaufendes Training des Grund-Modells, des lokalen und den globalen Modells erreicht, wodurch fortlaufend die beteiligten Modelle aktualisiert werden und dynamisch und sehr genau auf aktuelle Ereignisse bei Betrieb des technischen Geräts reagiert werden kann, wovon alle weiteren verbundenen Geräte an weiteren Klienten profitieren können.

Folgende Rollen können Systemeinheiten, wie Server und Klienten, einnehmen:
Lehrer T (FM): Ein Lehrer-Modell bezieht sich auf das Grund-Modell FM und verfügt dabei über eine Fülle von Wissen zu einer bestimmten Aufgabe. Das Lehrermodell vermittelt sein Wissen an ein Schüler-Modell, das heißt dem LFM.
Schüler S (LFM): Das Schüler-Modell ist in der föderierten Lernumgebung ein Modell, welches aus dem, vom Lehrer-Modell vermittelten Wissen lernt und sich in weiterer Folge anpasst. Es ist ein leichteres und ressourceneffizienteres Modell im Vergleich zum Lehrer, und daher für den Einsatz auf Edge-Geräten oder dezentralen Servern geeignet ist.

Folgende Arten an Kommunikation werden zwischen Servern und Klienten durchgeführt:
Klient Cn (LFM): Ein Klient ist eine dezentrale Einheit, die eine lokale Instanz des LightFleet-Modells (LFM) bereitstellt. Klienten nehmen am Trainingsprozess teil, indem sie Aktualisierungen ihrer lokalen Daten berechnen und diese Aktualisierungen zur Aggregation an einen zentralen Server übermitteln, ohne die Rohdaten freizugeben.
Server Sn (LFM): Ein Server ist im föderierten Lernen ist eine zentrale Stelle, die für die Koordination des Trainingsprozesses verantwortlich ist und aggregiert die von den Klienten gesendeten Modellaktualisierungen, aktualisiert das globale Modell und verteilt das aktualisierte Modell erneut an die Klienten. Das LightFleet-Modell (LFM) ist in der Regel so konzipiert, dass es effizient und auch für den Einsatz auf der Serverseite von föderierten Lernsystemen geeignet ist.

Durch das erfindungsgemäße Verfahren wird föderiertes Lernen mit Destillation kombiniert, sodass LFMs auf verschiedenen Klienten lokal mit ihren eigenen Datensätzen trainiert werden können, ohne dass ein direkter Wissenstransfer vom Grund-Modell erforderlich ist. Dieser Ansatz ermöglicht dezentrales Modelltraining und Wissensaustausch.

Ferner wird ein bidirektionaler Wissenstransfer ermöglicht, wobei der Wissenstransfer bidirektional zwischen FM und LFMs erfolgt. Zunächst destilliert das Grund-Modell das Wissen in föderierten Lernrunden auf die LFMs. Später tragen die LFMs während der Feinabstimmungsphase zum Wissen des Grund-Modells bei. Dieser bidirektionale Transfer fördert kollaboratives Lernen.

Außerdem erfolgt eine Aggregation mit Destillationsverlust, wobei der Server die Aktualisierungen der LFMs aggregiert, und einen Destillationsverlust berechnet, wodurch der Wissenstransferprozess während des Aggregationsschritts verbessert wird. Dadurch wird sichergestellt, dass die aggregierten Informationen aus LFMs in das Grund-Modell fließen können und dieses daher genauer machen kommen.

Darüber hinaus kann eine Feinabstimmung mit aggregierten LFMs erfolgen, welche anhand der aggregierten Informationen von LFMs nach föderierten Lernrunden fein abgestimmt werden können. Dieser Schritt hilft dem Grund-Modell, sich an das kollektive Wissen aus LFMs anzupassen und die Gesamtleistung des Modells zu verbessern.

Ferner kann eine Destillation spezifischer Anwendungsfälle erfolgen, denn der Algorithmus erwähnt Destillationswissen vom Grund-Modell zu den LFMs für einen bestimmten Anwendungsfall, eine bestimmte Domäne oder eine bestimmte Branche. Dies unterstreicht die Anpassungsfähigkeit und Anpassung des Wissenstransferprozesses basierend auf dem Anwendungskontext.

Wissensdestillation ist der Prozess der Übertragung von Wissen von einem großen Modell auf ein kleineres Modell unter Anwendung von entsprechenden Metainformationen, die den Betrieb des technischen Geräts näher charakterisieren. welche dem Verfahren bevorzugt bereitgestellt werden.

Es wird also versucht, das Wissen von einem großen Modell auf ein kleineres Modell übertragen, ohne dass es an Gültigkeit verliert, und insbesondere auf den spezifischen Betrieb des technischen Geräts zugeschnitten ist, was durch die Metainformationen definiert ist.

Es können also andere Anwendungen des Geräts, welche nicht durch die Metainformationen beschrieben werden, im Leicht-Modell unberücksichtigt bleiben.

Allgemein verfügen große Modelle beim maschinellen Lernen zwar über eine höhere Wissenskapazität als kleine Modelle, doch wird diese Kapazität möglicherweise nicht voll ausgeschöpft.

Mit anderen Worten können große Transformer-Modelle daher dazu dienen, ihr Wissen an einfache aufgebaute, kompaktere neuronale Netze zu übertragen, die weniger Ressourcen benötigen.

Der Prozess der Modelldestillation beinhaltet das Training eines kleineren Schülermodells, das das Verhalten eines größeren Lehrermodells nachahmt.

Durch die Nutzung des Wissens, das das Lehrermodell besitzt, kann das Schülermodell ähnliche Leistung erzielen, obwohl es deutlich kleiner ist.

Dabei wird das Schülermodell üblicherweise mit einer Kombination aus den ursprünglichen Trainingsdaten und den vom Lehrermodell erzeugten Soft Labels trainiert.

Durch die Übertragung des Wissens aus dem Lehrermodell auf das Schülermodell wird also ein kompaktes Modell erstellt, das die wesentlichen Informationen enthält, die für genaue Vorhersagen notwendig sind.

Wissensdestillation kann beispielsweise mithilfe von Modell-Beschneidung (engl. "model pruning") erfolgen, bei welchen beispielsweise unnötige Verbindungen, Parameter oder ganze Schichten aus einem vortrainierten neuronalen Netz entfernt werden, was auf der Grundlage verschiedener Kriterien erfolgen kann, wie beispielsweise der Größe der Gewichte, der Sensitivitätsanalyse oder der strukturierten Sparsamkeit.

Durch die Eliminierung redundanter oder weniger wichtiger Komponenten kann die Größe des Modells erheblich reduziert werden und gleichzeitig seine Leistung erhalten werden, was zu einer verbesserten Inferenzgeschwindigkeit und einem geringeren Speicherbedarf führen kann.

Alternativ kann Wissensdestillation mithilfe von Modell-Quantisierung wird die Genauigkeit der numerischen Werte in einem neuronalen Netz reduziert.

In der Regel verwenden Deep-Learning-Modelle 32-Bit-Gleitkommazahlen (FP32) zur Darstellung von Gewichten und Aktivierungen, und durch die Quantisierung des Modells auf Darstellungen mit geringerer Bitbreite kann die Modellgröße und den Speicherbedarf erheblich reduziert werden, wie durch Verwendung von 8-Bit-Ganzzahlen.

Ein weiterer alternativer Weg für Wissensdestillation ist die Destillation von Datensätzen, bei der ein kleineres Modell unter Verwendung einer sorgfältig ausgewählten Teilmenge der ursprünglichen Trainingsdaten trainiert wird und das Ziel verfolgt wird, einen destillierten Datensatz zu erstellen, welcher die wesentlichen Muster und Merkmale des vollständigen Datensatzes erfasst und gleichzeitig dessen Größe erheblich reduziert. Ein derartiger destillierte Datensatz dient als Stellvertreter für den Originaldatensatz und ermöglicht das Training von Modellen, die eine vergleichbare Leistung bei geringerem Speicherbedarf erzielen.

Der Wissenstransfer, bei welchem das Leicht-Modells mit dessen Modell-Struktur vom Grund-Modells gebildet wird, kann beispielsweise derart erfolgen, dass mithilfe von entsprechenden Eingabeaufforderungen an einen Grund-Modell-Server, etwa ein Modell basierend auf generativer künstlicher Intelligenz, also ein generativer vortrainierter Transformer wie ChatGPT, das Grund-Modell spezifisch auf einen bestimmten Anwendungsfall, eine bestimmte Domäne oder eine bestimmte Branche eingeschränkt wird, wobei die Eingabeaufforderungen automatisch generiert werden können, indem Beschreibungen des Anwendungsfalls etc. angewendet werden, wobei die Eingabeaufforderungen in Form von Metadaten für einen Anwendungsfall, eine Domäne oder eine Branche vorbestimmt sein können und dementsprechend bereitgestellt werden können.

Mit anderen Worten können Metainformationen beispielsweise für einen Anwendungsfall bereitgestellt werden, welche anschließend im vorher genannten Destillationsprozess zur Modell-Reduktion angewendet werden.

Unter dem Betrieb eines technischen Geräts kann beispielsweise das Ansteuern des Geräts mit Steuerinformationen unter Verwendung einer entsprechenden Steuervorrichtung, welche von einem Klienten umfasst sein kann, verstanden werden, wobei Steuerinformationen durch logische Steuerbefehle, analoge Steuer-Signale oder ähnliches zur Steuerung des technischen Geräts gebildet sein können.

Ebenso kann unter dem Betrieb eines technischen Geräts beispielsweise das Erfassen von Betriebsparametern beim Betrieb des Geräts unter Verwendung einer entsprechenden Erfassungs- oder Messvorrichtung, welche von einem Klienten umfasst sein kann, verstanden werden, wobei die Betriebsparameter durch Betriebs-Spannungen, Betriebs-Ströme, BetriebsTemperaturen, Betriebs-Leistungen, ein Drehmoment, Emissionen oder ähnliches zur Überwachung des Betriebs des technischen Geräts gebildet sein können.

In einer Weiterbildung der Erfindung ist es vorgesehen, dass der Wissenstransfer im Schritt b) erfolgt, indem für einen vorbestimmten Betriebsmodus des technischen Geräts aus dem Grund-Modell ein Teil-Modell, welches kleiner ist als das Grund-Modell, also eine Teilmenge des Grund-Modells, als Leicht-Modell abgeleitet wird.

Dadurch können Metainformationen für einen Anwendungsfall, wie ein bestimmter Betriebsmodus des technischen Geräts bereitgestellt werden, um anschließend im Destillationsprozess zur Modell-Reduktion angewendet zu werden.

Der Betriebsmodus kann einen zulässigen oder auch einen unzulässigen Betriebszustand des technischen Geräts abbilden, um daraus ein individuelles, an den tatsächlichen Verschließ des Geräts angepasstes Wartungsintervall zu abzuleiten.

Dadurch wird erreicht, dass das Leicht-Modell bereits an die Klienten und deren verbundene Geräte angepasst werden kann und somit ein genauerer und/oder effizienterer Betrieb des Geräts erfolgen kann.

In einer Weiterbildung der Erfindung ist es vorgesehen, dass der der Wissenstransfer im Schritt b) erfolgt, indem für einen vorbestimmten Betriebsmodus des technischen Geräts aus dem Grund-Modell ein Teil-Modell, welches kleiner ist als das Grund-Modell, als Leicht-Modell abgeleitet wird, wobei der Betriebsmodus vorzugsweise ein zulässiger oder unzulässiger Wertebereich für Betriebsparameter oder Betriebskenngrößen des technischen Geräts ist.

Dadurch können Metainformationen für einen Anwendungsfall, wie bestimmte Betriebsparameter oder Betriebskenngrößen des technischen Geräts des technischen Geräts bereitgestellt werden, um anschließend im Destillationsprozess zur Modell-Reduktion angewendet zu werden.

Dadurch wird erreicht, dass das Leicht-Modell bereits an die Klienten und deren verbundene Geräte angepasst werden kann und somit ein genauerer und/oder effizienterer Betrieb des Geräts erfolgen kann.

In einer Weiterbildung der Erfindung ist es vorgesehen, dass der der Wissenstransfer im Schritt b) erfolgt, indem für eine vorbestimmte Anwendung des technischen Geräts aus dem Grund-Modell ein Teil-Modell, welches kleiner ist als das Grund-Modell, als Leicht-Modell abgeleitet wird, wobei die Anwendung vorzugsweise durch Betriebskenngrößen vorgeben ist, welche zur Steuerung des Geräts angewendet werden, wie Betriebsspannungen oder Betriebsleistungen des Geräts.

Dadurch können die vorher genannten Vorteile weiter verbessert werden.

Das technische Gerät kann beispielsweise eine Produktionsvorrichtung wie eine Spritzgussanlage, eine Betriebsvorrichtung wie ein Lüfter, eine Maschine oder eine Pumpe, oder Inspektionsvorrichtung wie eine Kamera, eine Überwachungsvorrichtung wie ein Magnetfeldsensor oder ähnliches sein.

System zum Betrieb eines technischen Geräts, das System umfassend einen ersten Server mit einer ersten Rechenvorrichtung und einem ersten Speicher, und mehreren Klienten mit jeweiligen zweiten Rechenvorrichtungen und jeweiligen zweiten Speichern, wobei das System dazu eingerichtet ist, das erfindungsgemäße Verfahren auszuführen.

Computer-Programm-Produkt mit darin gespeicherten maschinenlesbaren Anweisungen, die, wenn sie von dem erfindungsgemäßen System ausgeführt werden, dieses veranlassen, das erfindungsgemäße Verfahren auszuführen.

In den nachfolgenden Figuren wird ein Ausführungsbeispiel der Erfindung näher dargestellt. Die Zeichnungen zeigen in
- Fig. 1: ein Ausführungsbeispiel in Form eines Blockschaltbild für ein Systems, auf welchem das erfindungsgemäße Verfahren ausführbar ist,
- Fig. 2: ein Ausführungsbeispiel in Form eines Flussdiagramms des erfindungsgemäßen Verfahrens,
- Fig. 3: ein Ausführungsbeispiel in Form eines Pseudo-Codes des erfindungsgemäßen Verfahrens.

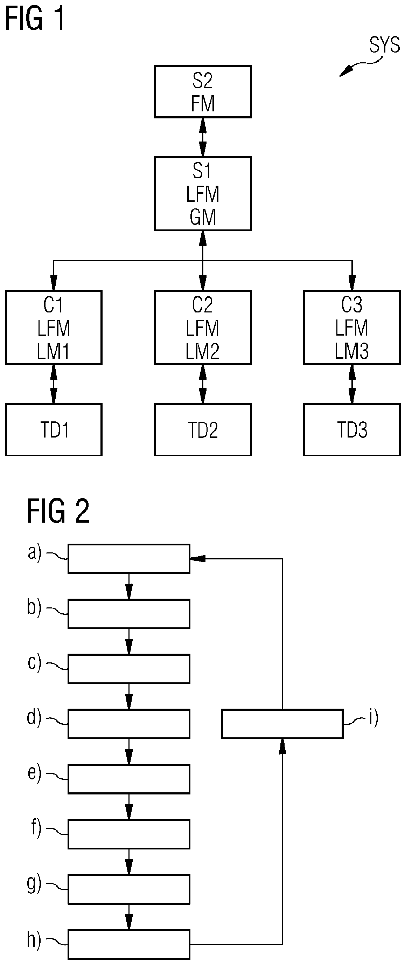

**Fig. 1** stellt ein Ausführungsbeispiel in Form eines Blockschaltbild für ein Systems dar, auf welchem das erfindungsgemäße Verfahren ausführbar ist.

Das System SYS umfasst einen ersten Server S1 und drei jeweils verbundene Klienten C1-C3.

Ferner umfasst das System SYS einen mit dem ersten Server S1 verbundenen, zweiten Server S2, welcher bevorzugt in einer Cloud gelegen ist und über hohe Rechen- und Speicher-Kapazitäten verfügt.

Das System SYS ist dazu eingerichtet, das erfindungsgemäße Verfahren, welches im Folgenden näher beschrieben wird, auszuführen.

**Fig. 2** zeigt ein Ausführungsbeispiel in Form eines Flussdiagramms des erfindungsgemäßen Verfahrens.

Folgende Schritte werden dabei ausgeführt:
a) Bereitstellen eines Grund-Modells FM an den ersten Server S1,
b) Erstellen eines Leicht-Modells LFM aus dem Grund-Modell FM durch Wissenstransfer, wobei das Leicht-Modells LFM eine Modell-Struktur aufweist, welche eine Teilmenge der Modell-Struktur des Grund-Modells FM ist, durch den ersten Server S1,
c) Übertragen des Leicht-Modells LFM vom ersten Server S1 an die Klienten C1-C3,
d) Erzeugen und Trainieren eines lokalen Modells LM1-LM3 aus dem Leicht-Modell, im jeweiligen Klienten C1-C3 mit jeweiligen bereitgestellten Trainingsdaten,
e) Übertragen des trainierten, lokalen Modells LM1-LM3 von den jeweiligen Klienten C1-C3 an den ersten Server S1,
f) Aggregieren der empfangenen lokalen Modelle LM1-LM3 zu einem globalen Modell GM, im ersten Server S1,
g) Trainieren des Grund-Modells FM mit dem globalen Modell GM, durch den ersten Server S1 oder durch einen verbundenen, zweiten Server S2 des Systems SYS, welcher in einer Cloud gelegen ist,
h) Übertragen des globalen Modells GM vom ersten Server S1 an einen jeweiligen Klienten C1-C3, welcher mit dem technischen Gerät TD1 verbundenen ist, und Betreiben des technischen Geräts TD1 mit dem empfangenen Modell GM,
i) Fortsetzen mit Schritt a).

Der Wissenstransfer im Schritt b) kann beispielsweise erfolgen, indem für einen vorbestimmten Betriebsmodus des technischen Geräts TD1 aus dem Grund-Modell FM ein Teil-Modell, also eine Teilmenge, welches kleiner ist als das Grund-Modell FM, als Leicht-Modell LFM abgeleitet wird.

Ein Betriebsmodus kann beispielsweise ein zulässiger oder unzulässiger Wertebereich für Betriebsparameter oder Betriebskenngrößen des Geräts TD1 sein, welche durch entsprechende Messvorrichtungen erfasst werden.

Der Wissenstransfer im Schritt b) beispielsweise ebenso erfolgen, indem für eine vorbestimmte Anwendung des technischen Geräts TD1 aus dem Grund-Modell FM ein Teil-Modell, also eine Teilmenge, welches kleiner ist als das Grund-Modell FM, als Leicht-Modell LFM abgeleitet wird.

Eine Anwendung kann beispielsweise Betriebskenngrößen vorgeben, welche zur Steuerung des Geräts TD1 angewendet werden, wie Betriebsspannungen oder Betriebsleistungen des Geräts TD1.

Das föderierte Lernen kann so ausgeführt werden, dass jeder Klient C1-C3 mit eigenen, lokalen Trainingsdaten das jeweilige lokale Modell LM1-LM3 trainiert.

Die Aggregation von lokalen Modellen LM1-LM3 kann im ersten Server S1 derart erfolgen, dass Modell-Gewichte der einzelnen lokalen Modelle LM1-LM3 gemittelt werden oder anderen statistische Funktionen angewendet werden, um ein gemeinsames globales Modell GM zu erhalten.

Es können mehrere Runden an föderiertem Lernen zwischen dem ersten Server S1 und den Klienten C1-C3 durchgeführt werden, um eine Feinabstimmung der einzelnen lokalen Modelle LM1-LM3 zu erhalten.

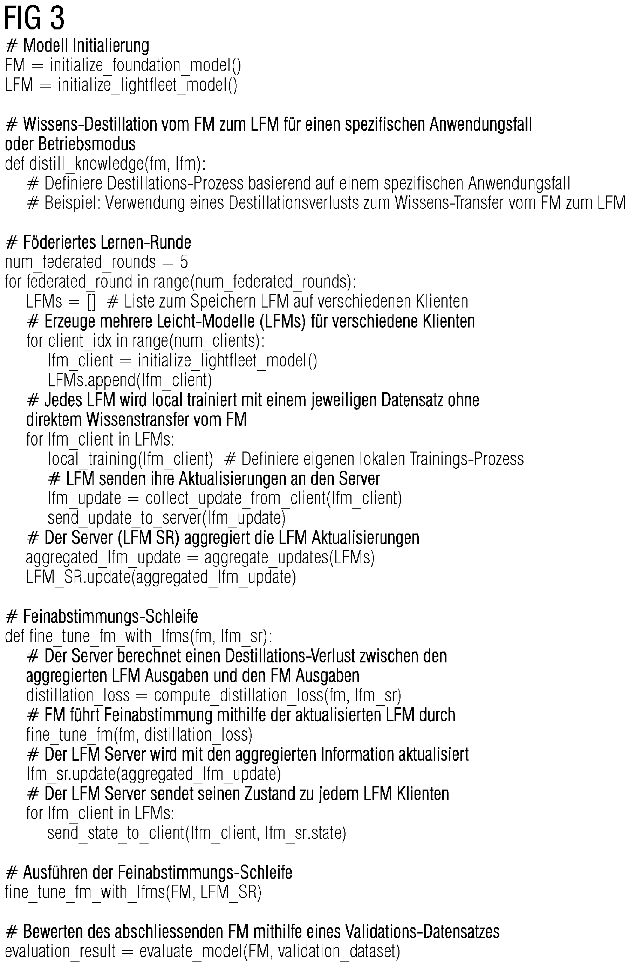

Fig. 3 zeigt ein Ausführungsbeispiel in Form eines Pseudo-Codes des erfindungsgemäßen Verfahrens.

*Unabhängig vom grammatikalischen Geschlecht eines bestimmten Begriffes sind Personen mit männlicher, weiblicher oder anderer Geschlechteridentität mit umfasst.*

### Bezugszeichenliste

- C1-C3: Klient
- FM: Grund-Modell. Gründungs-Modell
- GM: globales Modell
- LFM: Leicht-Modell
- LM1-LM3: lokales Modell
- S: Student
- S1, S2: Server
- SC: Server in Cloud
- SYS: System
- T: Lehrer
- TD1-TD3: technisches Gerät

## Patentansprüche

1. Computer-implementiertes Verfahren zum Betrieb eines technischen Geräts (TD1) durch ein System (SYS) mit einem ersten Server (S1) und mehreren Klienten (C1-C3), wobei folgende Schritte ausgeführt werden:
a) Bereitstellen eines Grund-Modells (FM) an den ersten Server (S1),
b) Erstellen eines Leicht-Modells (LFM) aus dem Grund-Modell (FM) durch Wissenstransfer, wobei das Leicht-Modells (LFM) eine Modell-Struktur aufweist, welche eine Teilmenge der Modell-Struktur des Grund-Modells (FM) ist, durch den ersten Server (S1),
c) Übertragen des Leicht-Modells (LFM) vom ersten Server (S1) an die Klienten (C1-C3),
d) Erzeugen und Trainieren eines lokalen Modells (LM1-LM3) aus dem Leicht-Modell, im jeweiligen Klienten (C1-C3) mit jeweiligen bereitgestellten Trainingsdaten,
e) Übertragen des trainierten, lokalen Modells (LM1-LM3) von den jeweiligen Klienten (C1-C3) an den ersten Server (S1),
f) Aggregieren der empfangenen lokalen Modelle (LM1-LM3) zu einem globalen Modell (GM), im ersten Server (S1),
g) Trainieren des Grund-Modells (FM) mit dem globalen Modell (GM), durch den ersten Server (S1) oder durch einen verbundenen, zweiten Server (S2) des Systems (SYS), welcher in einer Cloud gelegen ist,
h) Übertragen des globalen Modells (GM) vom ersten Server (S1) an einen jeweiligen Klienten (C1-C3), welcher mit dem technischen Gerät (TD1) verbundenen ist, und Betreiben des technischen Geräts (TD1) mit dem empfangenen Modell (GM),
i) Fortsetzen mit Schritt a).

2. Verfahren nach Anspruch 1, wobei der Wissenstransfer im Schritt b) erfolgt, indem für einen vorbestimmten Betriebsmodus des technischen Geräts (TD1) aus dem Grund-Modell (FM) ein Teil-Modell, welches kleiner ist als das Grund-Modell (FM), als Leicht-Modell (LFM) abgeleitet wird, wobei der Betriebsmodus vorzugsweise ein zulässiger oder unzulässiger Wertebereich für Betriebsparameter oder Betriebskenngrößen des technischen Geräts (TD1) ist.

3. Verfahren nach Anspruch 1, wobei der Wissenstransfer im Schritt b) erfolgt, indem für eine vorbestimmte Anwendung des technischen Geräts (TD1) aus dem Grund-Modell (FM) ein Teil-Modell, welches kleiner ist als das Grund-Modell (FM), als Leicht-Modell (LFM) abgeleitet wird, wobei die Anwendung vorzugsweise durch Betriebskenngrößen vorgeben ist, welche zur Steuerung des Geräts (TD1) angewendet werden, wie Betriebsspannungen oder Betriebsleistungen des Geräts (TD1).

4. System zum Betrieb eines technischen Geräts (TD1), das System (SYS) umfassend einen ersten Server (S1) mit einer ersten Rechenvorrichtung und einem ersten Speicher, und mehreren Klienten (C1-C3) mit jeweiligen zweiten Rechenvorrichtungen und jeweiligen zweiten Speichern, wobei das System (SYS) dazu eingerichtet ist, das Verfahren nach einem der vorhergehenden Schritte auszuführen.

5. Computer-Programm-Produkt mit darin gespeicherten maschinenlesbaren Anweisungen, die, wenn sie von dem System nach einem der vorhergehenden Ansprüche ausgeführt werden, dieses veranlassen, das Verfahren nach einem der vorhergehenden Ansprüche auszuführen.
